# EUROPÄISCHE PATENTSCHRIFT

(11) **EP 3 709 853 B1**
(45) Veröffentlichungstag und Bekanntmachung des Hinweises auf die Patenterteilung: **16.08.2023**
(21) Anmeldenummer: 18807256.5
(22) Anmeldetag: 16.11.2018
(51) Int. Cl.: A47L 9/28

(54) **BODENBEARBEITUNG MITTELS EINES AUTONOMEN MOBILEN ROBOTERS**
FLOOR PROCESSING BY MEANS OF AN AUTONOMOUS MOBILE ROBOT
TRAITEMENT DU SOL AU MOYEN D'UN ROBOT AUTONOME MOBILE

(30) Priorität: 17.11.2017 DE 102017127180
(43) Veröffentlichungstag der Anmeldung: 23.09.2020
(73) Patentinhaber: Robart GmbH, 4020 Linz (AT)
(72) Erfinder: ARTES, Harold, 4020 Linz (AT); CONTI, David, 4020 Linz (AT); FREUDENTHALER, Christoph, 4020 Linz (AT); SEETHALER, Dominik, 4020 Linz (AT); VOGEL, Reinhard, 4020 Linz (AT)
(74) Vertreter: Westphal, Mussgnug & Partner, Patentanwälte mbB
(86) Internationale Anmeldenummer: PCT/EP2018/081610
(87) Internationale Veröffentlichungsnummer: WO 2019/097012

(56) Entgegenhaltungen:
- EP-A2- 2 853 976
- DE-A1-102010 017 211
- DE-B3- 10 261 787
- DE-C1- 4 421 805
- US-A1- 2012 169 497
- US-A1- 2012 223 216

## Beschreibung

### TECHNISCHES GEBIET

Die Beschreibung betrifft das Gebiet der autonomen mobilen Roboter zur Bearbeitung von Oberflächen.

### HINERGRUND

In den letzten Jahren finden autonome mobile Roboter zunehmend Verwendung beispielsweise zur Bearbeitung (insbesondere Reinigung) einer Bodenfläche. Hierbei kommt es darauf an, eine gewisse Fläche vollständig mit einem am Roboter angebrachten Flächenbearbeitungsgerät wie beispielsweise einer Bürste zu bearbeiten. Einfache Geräte kommen ohne die Erstellung und Nutzung einer Karte des Robotereinsatzgebiets aus, indem sie sich beispielsweise zufällig über die zu reinigende Fläche bewegen. Komplexere Roboter nutzen eine Karte des Robotereinsatzgebiets, welche sie selber erstellen oder in elektronischer Form zur Verfügung gestellt bekommen. Diese Systeme ermöglichen es, sich die bereits bearbeiteten Flächen zu merken.

Moderne autonome mobile Roboter, welche für die Navigation eine Karte des Robotereinsatzgebietes nutzen, können versuchen, bei der Bearbeitung (z. B. Reinigung) einer Fläche einen Bearbeitungsmodus mit einem möglichst systematischen Bewegungs- bzw. Bearbeitungsmuster zu verwenden. Dieses muss an die komplexe Umgebung in dem Robotereinsatzgebiet wie z.B. in einer Wohnung mit Möbeln angepasst werden. Zudem muss der Roboter in der Lage sein, auf unerwartete Gegebenheiten zu reagieren, wie beispielsweise Menschen, die sich in seinem Einsatzgebiet bewegen, oder Hindernisse, die mit den Sensoren des Roboters schwer erfassbar sind, oder besonders stark verschmutzte Bereiche.

Die konkrete Pfadplanung (Trajektorienplanung) hängt dabei von dem Bearbeitungsmuster ab sowie von der im jeweiligen Bearbeitungsmodus verwendeten Kollisionsvermeidungsstrategie. Die Weise, wie mit nicht bearbeiteten Teilbereichen umgegangen wird, kann ebenfalls von dem Bearbeitungsmodus abhängen. Ein Bearbeitungsmodus zum Bearbeiten einer Bodenfläche ist also unter anderem charakterisiert durch das Bewegungsmuster (z.B. Mäander, Spirale, etc.), mit dem der Roboter versucht die Bodenfläche abzudecken, die jeweils gefahrene Geschwindigkeit, die verwendete Kollisionsvermeidungsstrategie und der Strategie zur Nachbearbeitung unbearbeiteter (z.B. aufgrund von Hindernissen ausgelassener) Teilflächen der Bodenfläche. Verschiedene Ansätze (Bearbeitungsmodi) für die robotergestützte Bearbeitung einer Bodenfläche sind z.B. in der Publikation DE 10 2015 119 865 A1 beschrieben. Die Publikation US 2012/169497 A1 offenbart einen Roboter mit einem Schmutzsensor, bei dem ein Betriebszustand, wie z.B. eine Geschwindigkeit, abhängig vom Schmutzsensorsignal geändert werden kann.

Ganz allgemein kann die der Erfindung zugrunde liegende Aufgabe darin gesehen werden, bestehende von Robotern durchgeführte Verfahren für einen autonomen mobilen Roboter zur Bearbeitung einer Oberfläche (z.B. zum Reinigung einer Bodenfläche) zu verbessern, um hierdurch die Effizienz des Roboters zu steigern.

### ZUSAMMENFASSUNG

Die oben genannte Aufgabe kann mit einem Verfahren gemäß Anspruch 1 sowie mit einem autonomen mobilen Roboter gemäß Anspruch 13 gelöst werden. Verschiedene Ausführungsformen und Weiterentwicklungen sind Gegenstand der abhängigen Ansprüche.

Ein Ausführungsbeispiel betrifft ein Verfahren zur Steuerung eines autonomen mobilen Roboters, das folgendes umfasst: das Steuern des Roboters in einem Bearbeitungsmodus zum Bearbeiten einer Bodenfläche mit einem Bodenbearbeitungsmodul des Roboters, das Erfassen eines die Verschmutzung der Bodenfläche repräsentierenden Schmutzsensorsignals mittels eines am Roboter angeordneten Schmutzsensors sowie das Ändern der Geschwindigkeit des Roboters basierend auf dem Schmutzsensorsignal. Das Schmutzsensorsignal kann abhängig von der Verschmutzung der Bodenfläche einen ersten Zustand und einen zweiten Zustand annehmen. Der erste Zustand des Schmutzsensorsignals zeigt eine normale Verschmutzung und der zweite Zustand des Schmutzsensorsignals eine starke Verschmutzung an. Die zwei Zustände werden basierend auf einem Schwellenwert von detektierten Schmutzpartikeln unterschieden. Als Reaktion auf den zweiten Zustand des Schmutzsensorsignals wird die Geschwindigkeit des Roboters von einem ersten Wert auf einen zweiten Wert reduziert.

Des Weiteren wird ein autonomer mobiler Roboter beschrieben mit einer Steuereinheit, die dazu ausgebildet ist, den Roboter zu veranlassen eines oder mehrere der hier beschriebenen Verfahren durchzuführen.

### KURZE BESCHREIBUNG DER ZEICHNUNGEN

Verschiedene Ausführungsbeispiele werden nachfolgend anhand von Abbildungen näher erläutert. Die Darstellungen sind nicht zwangsläufig maßstabsgetreu und die Erfindung beschränkt sich nicht nur auf die dargestellten Aspekte. Vielmehr wird Wert daraufgelegt, die zugrunde liegenden Prinzipien darzustellen. In den Abbildungen zeigt:
Figur 1 illustriert einen autonomen mobilen Roboter in einem Robotereinsatzgebiet.
Figur 2 illustriert anhand eines Blockdiagramms exemplarisch den Aufbau eines autonomen mobilen Roboters.
Figur 3 illustriert anhand eines Blockdiagramms exemplarisch das funktionale Zusammenwirken von Sensoreinheit und Steuersoftware eines autonomen, mobilen Roboters.
Figur 4 ist ein Flussdiagramm zur Darstellung eines Beispiels des hier beschriebenen Verfahrens.
Figuren 5A-5E, illustrieren ein exemplarisches Bewegungsmuster eines autonomen mobilen Roboters bei der Bearbeitung einer Bodenfläche gemäß den hier beschriebenen Ausführungsbeispielen.

### DETAILLIERTE BESCHREIBUNG

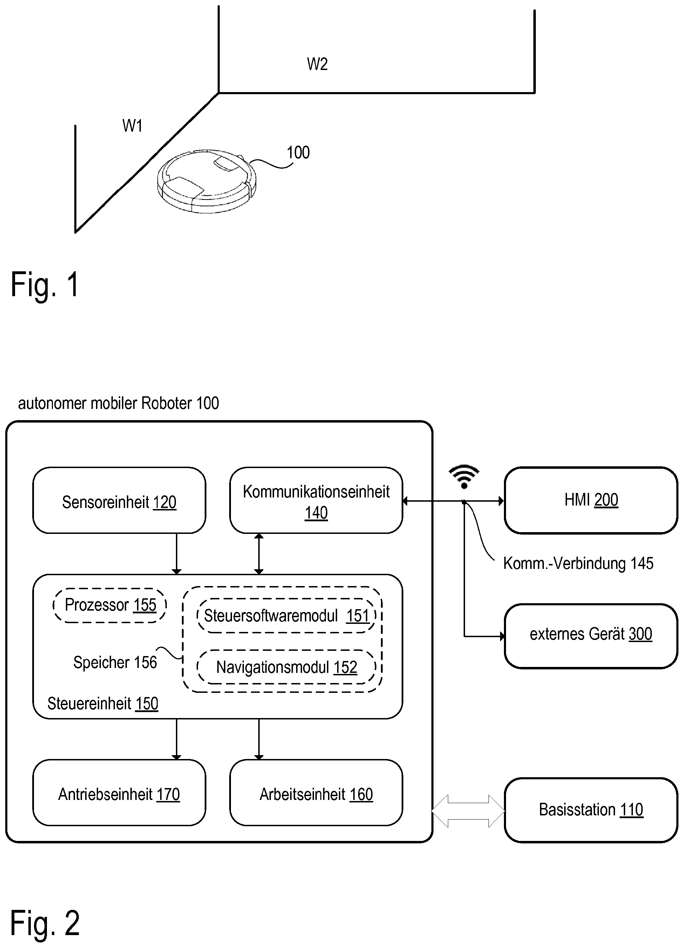

Fig. 1 illustriert exemplarisch einen autonomen mobilen Roboter 100 zur Bearbeitung einer Bodenfläche. Moderne autonome mobile Roboter 100 navigieren kartenbasiert, d.h. sie verfügen über eine elektronische Karte des Robotereinsatzgebietes. Während der Roboter sich durch das Einsatzgebiet bewegt, detektiert der Roboter Hindernisse. Hindernisse können Gegenstände wie z.B. Möbel, Wände, Türen, etc. sein. Jedoch können auch Personen oder Tiere vom Roboter als Hindernisse detektiert werden. In dem dargestellten Beispiel hat der Roboter 100 bereits Teile der Wände W1 und W2 eines Raumes erkannt. Verfahren zur Erstellung und Aktualisierung von Karten sowie zur Ermittlung der Position des autonomen mobilen Roboters 100 bezüglich dieser Karte im Robotereinsatzgebiet sind an sich bekannt. Beispielsweise können hierfür SLAM-Verfahren eingesetzt werden (SLAM: *Simultaneous Localization and Mapping*, deutsch: simultane Lokalisierung und Kartenerstellung).

Figur 2 zeigt exemplarisch anhand eines Blockdiagrams verschiedene Einheiten (Module) eines autonomen mobilen Roboters 100. Eine Einheit bzw. ein Modul kann dabei eine eigenständige Baugruppe oder ein Teil einer Software zur Steuerung des Roboters sein. Eine Einheit kann mehrere Untereinheiten aufweisen. Die für das Verhalten des Roboters 100 zuständige Software kann von der Steuereinheit 150 des Roboters 100 ausgeführt werden. In dem dargestellten Beispiel beinhaltet die Steuereinheit 150 einen Prozessor 155, der dazu ausgebildet ist, in einem Speicher 156 enthaltene Software-Instruktionen auszuführen. Einige Funktionen der Steuereinheit 150 können zumindest teilweise auch mit Hilfe eines externen Rechners durchgeführt werden. Das heißt, die von der Steuereinheit 150 benötigte Rechenleistung kann zumindest teilweise auf einen externen Computer ausgelagert sein, welcher beispielsweise über ein Heimnetzwerk oder über das Internet (Cloud) erreichbar sein kann.

Der autonome mobile Roboter 100 umfasst eine Antriebseinheit 170, welche beispielsweise Elektromotoren, Getriebe und Räder aufweisen kann, wodurch der Roboter 100 - zumindest theoretisch - jeden Punkt eines Einsatzgebiets anfahren kann. Die Antriebseinheit 170 ist dazu ausgebildet, von der Steuereinheit 150 empfangene Kommandos oder Signale in eine Bewegung des Roboters 100 umzusetzen.

Der autonome mobile Roboter 100 umfasst des Weiteren eine Kommunikationseinheit 140, um eine Kommunikationsverbindung 145 zu einer Mensch-Maschine-Schnittstelle (HMI) 200 und/oder anderen externen Geräten 300 herzustellen. Die Kommunikationsverbindung 145 ist beispielsweise eine direkte drahtlose Verbindung (z. B. Bluetooth), eine lokale drahtlose Netzwerkverbindung (z. B. WLAN oder ZigBee) oder eine Internetverbindung (z. B. zu einem Cloud-Service). Die Mensch-Maschine-Schnittstelle 200 kann einem Nutzer Informationen über den autonomen mobilen Roboter 100 beispielsweise in visueller oder auch akustischer Form ausgeben (z. B. Batteriestatus, aktueller Arbeitsauftrag, Karteninformationen wie eine Reinigungskarte, etc.) und Nutzerkommandos für einen Arbeitsauftrag des autonomen mobilen Roboters 100 entgegennehmen. Beispiele für eine HMI200 sind Tablet-PC, Smartphone, Smartwatch und andere Wearables, Computer, Smart-TV, oder Head-Mounted Displays, usw. Eine HMI 200 kann zusätzlich oder alternativ direkt in den Roboter integriert sein, wodurch der Roboter 100 beispielsweise über Tasten, Gesten und/oder Sprachein- und -ausgabe bedient werden kann.

Beispiele für externe Geräte 300 sind Computer und Server, auf denen Berechnungen und/oder Daten ausgelagert werden, externe Sensoren, die zusätzliche Informationen liefern, oder andere Haushaltsgeräte (z.B. andere autonome mobile Roboter), mit denen der autonome mobile Roboter 100 zusammenarbeiten und/oder Informationen austauschen kann.

Der autonome mobile Roboter 100 kann eine Arbeitseinheit 160 aufweisen, insbesondere eine Bearbeitungseinheit zur Bearbeitung (z.B. Reinigung) einer Bodenfläche. Eine solche Bearbeitungseinheit kann z.B. eine Saugeinheit zum Erzeugen eines Luftstroms, der eine Verschmutzung aufnimmt, Bürsten oder sonstige Reinigungsvorrichtungen umfassen. Alternativ oder zusätzlich kann der Roboter dazu eingerichtet sein eine Reinigungsflüssigkeit auf die Bodenfläche aufzutragen und zu verarbeiten.

Der autonome mobile Roboter 100 umfasst eine Sensoreinheit 120 mit verschiedenen Sensoren, beispielsweise einen oder mehrere Sensoren zur Erfassung von Informationen über die Umgebung (*environment*) des Roboters in seinem Einsatzgebiet, wie z.B. die Position und Ausdehnung von Hindernissen oder anderen Landmarken (*landmarks*) im Einsatzgebiet. Sensoren zur Erfassung von Informationen über die Umgebung sind beispielsweise Sensoren zur Messung von Abständen zu Objekten (z.B. Wänden oder anderen Hindernissen, etc.) in der Umgebung des Roboters. Für diesen Zweck sind unterschiedliche Sensoren bekannt wie beispielsweise optische und/oder akustische Sensoren, die mittels Triangulation oder Laufzeitmessung eines ausgesandten Signals Abstände messen können (Triangulationssensor, 3D-Kamera, Laserscanner, Ultraschallsensoren, etc.). Alternativ oder zusätzlich kann eine Kamera genutzt werden, um Informationen über die Umgebung zu sammeln. Insbesondere bei Betrachtung eines Objekts von zwei oder mehr Positionen aus, kann ebenfalls die Position und Ausdehnung eines Objekts (Hindernisses) bestimmt werden.

Zusätzlich kann der Roboter Sensoren besitzen, um einen (zumeist unbeabsichtigten) Kontakt (bzw. eine Kollision) mit einem Hindernis zu detektieren. Dies kann durch Beschleunigungssensoren (die z.B. die Geschwindigkeitsänderung des Roboters bei einer Kollision detektieren), Kontaktschalter, kapazitive Sensoren oder andere taktile bzw. berührungsempfindliche Sensoren realisiert werden. Zusätzlich kann der Roboter Bodensensoren (auch als Absturzsensoren bzw. Drop-Sensor, bezeichnet) besitzen, um eine Kante im Boden, beispielsweise eine Treppenstufe, zu erkennen. Weitere übliche Sensoren im Bereich autonomer mobiler Roboter sind Sensoren zur Bestimmung der Geschwindigkeit und/oder des zurückgelegten Weges des Roboters wie z.B. Odometer bzw. Inertialsensoren (Beschleunigungssensor, Drehratensensor) zur Bestimmung von Lage- und Bewegungsänderung des Roboters sowie Radkontaktschalter, um einen Kontakt zwischen Rad und Boden zu detektieren.

Zusätzlich kann der Roboter Sensoren zur Erfassung der Verschmutzung der Bodenfläche besitzen. Derartige Sensoren werden hier als Schmutzsensoren bezeichnet. Beispielsweise können derartige Sensoren den während der Reinigung durch den Roboter aufgenommenen Schmutz erfassen. So besitzt ein Saugroboter einen Kanal, über den angesaugte Luft mit aufgenommen Schmutz (z.B. Staub) vom Boden zu einem Schmutzauffangbehälter geleitet wird. Ein Schmutzsensor (*dirt sensor*) kann z.B. einen Messwert liefern, der jene Menge an Schmutz repräsentiert, der sich in dem durch den Kanal strömenden Luftstrom befindet. Ein anderer Schmutzsensor kann z.B. Schwingungen und Erschütterungen von schwereren Schmutzteilchen erfassen (z.B. mit einem Piezosensor). Alternativ oder zusätzlich kann optisch die Menge des im Luftstrom befindlichen Schmutzes erfasst werden. Beispielsweise kann direkt in Bildaufnahmen einer Kamera die Verschmutzung ermittelt werden. Eine weitere Variante ist die Kombination einer oder mehr Lichtquellen und einem oder mehreren lichtempfindlichen Empfängern. Die im Luftstrom enthaltenen Schmutzteilchen streuen das ausgesandte Licht abhängig von ihrer Anzahl und Größe, wodurch die Intensität des vom Empfänger detektierten Lichtes variiert. Eine weitere Möglichkeit ist die Detektion des Schmutzes direkt auf einer Bodenfläche. Beispielsweise kann eine Verschmutzung direkt mit einer Kamera erfasst werden. Alternativ oder zusätzlich kann die Bodenfläche mit einer Lichtquelle beleuchtet werden, und eine Verschmutzung anhand der Eigenschaften des reflektierten Lichtes erfasst werden. Beispielsweise kann eine Verschmutzung durch eine Flüssigkeit basierend auf der Leitfähigkeit der Bodenfläche erkannt werden. Diese und andere Sensoren zur Erfassung der Verschmutzung der Bodenfläche sind an sich bekannt und werden daher nicht weiter diskutiert.

In einem einfachen Beispiel zeigt das Messsignal des Schmutzsensors zumindest zwei Zustände an. Hierbei indiziert der erste Zustand keine bzw. eine normale Verschmutzung und der zweite Zustand eine starke Verschmutzung (d.h. die gemessene Verschmutzung ist über einem Schwellenwert). Die Unterscheidung der zwei Zustände erfolgt beispielsweise basierend auf einem Schwellenwert von detektierten Schmutzpartikeln. Prinzipiell können auch mehr als zwei Zustände unterschieden werden (z.B. "sauber", "normal verschmutzt", "stark verschmutzt"), wodurch eine feinere Abstufung der Reaktion des Roboters auf eine Verschmutzung ermöglicht wird.

Der autonome mobile Roboter 100 kann einer Basisstation 110 zugeordnet sein, an welcher er beispielsweise seine Energiespeicher (Batterien) laden kann. Zu dieser Basisstation 110 kann der Roboter 100 nach Abschluss einer Aufgabe zurückkehren. Wenn der Roboter keine Aufgabe mehr zu bearbeiten hat, kann er in der Basisstation 110 auf einen neuen Einsatz warten.

Die Steuereinheit 150 kann dazu ausgebildet sein, alle Funktionen bereit zu stellen, die der Roboter benötigt, um sich selbstständig in seinem Einsatzgebiet zu bewegen und eine Aufgabe zu verrichten. Hierzu umfasst die Steuereinheit 150 beispielsweise den Prozessor 155 und das Speichermodul 156, um eine Software auszuführen. Die Steuereinheit 150 kann basierend auf den von der Sensoreinheit 120 und der Kommunikationseinheit 140 erhaltenen Informationen Steuerkommandos (z. B. Steuersignale) für die Arbeitseinheit 160 und die Antriebseinheit 170 erzeugen. Die Antriebseinheit 170 kann wie bereits erwähnt diese Steuersignale bzw. Steuerkommandos in eine Bewegung des Roboters umsetzen. Auch die in dem Speicher 156 enthaltene Software kann modular ausgebildet sein. Ein Navigationsmodul 152 stellt beispielsweise Funktionen zum automatischen Erstellen einer Karte des Robotereinsatzgebietes, sowie zur Pfadplanung des Roboters 100 bereit. Das Steuersoftwaremodul 151 stellt z.B. allgemeine (globale) Steuerfunktionen bereit und kann eine Schnittstelle zwischen den einzelnen Modulen bilden.

Damit der Roboter autonom eine Aufgabe (*task*) verrichten kann, kann die Steuereinheit 150 Funktionen zur Navigation des Roboters in seinem Einsatzgebiet umfassen, die von dem oben erwähnten Navigationsmodul 152 bereitgestellt werden. Diese Funktionen sind an sich bekannt und können unter anderem eine der folgenden umfassen:
- das Erstellen von (elektronischen) Karten durch Sammeln von Informationen über die Umgebung mit Hilfe der Sensoreinheit 120, beispielsweise aber nicht ausschließlich mittels SLAM-Verfahren,
- das Management von einer oder mehreren Karten zu einem oder mehreren den Karten zugeordneten Einsatzgebieten des Roboters,
- das Bestimmen der Position und Orientierung (zusammen als "Pose" bezeichnet) des Roboters in einer Karte basierend auf den mit den Sensoren der Sensoreinheit 120 ermittelten Informationen der Umgebung,
- eine kartenbasierte Pfadplanung (Trajektorienplanung) von einer aktuellen Pose des Roboters (Startpunkt) zu einem Zielpunkt,
- ein Konturfolgemodus, in dem der Roboter (100) sich entlang der Kontur eines oder mehrerer Hindernisse (z.B. einer Wand) in einem im Wesentlichen konstanten Abstand d zur dieser Kontur bewegt,
- eine Teilgebietserkennung, bei der die Karte analysiert und in Teilgebiete zerlegt wird, wobei beispielsweise Raumgrenzen wie Wände und Türdurchgänge identifiziert werden, wodurch die Teilgebiete die Räume einer Wohnung und/oder sinnvolle Teilbereiche dieser Räume beschreiben.

Die Steuereinheit 150 kann mit Hilfe des Navigationsmoduls 152 und basierend auf den Informationen der Sensoreinheit 120 beispielsweise während des Betriebs des Roboters laufend eine Karte des Robotereinsatzgebietes aktualisieren z.B. wenn die Umgebung des Roboters sich verändert (Hindernis wird verschoben, Tür wird geöffnet, etc.).

Im Allgemeinen ist eine vom Roboter 100 verwendbare (elektronische) Karte eine Sammlung von Kartendaten (z.B. eine Datenbank) zur Speicherung von ortsbezogenen Informationen über ein Einsatzgebiet des Roboters und die für den Roboter relevante Umgebung in diesem Einsatzgebiet. In diesem Zusammenhang bedeutet "ortbezogen", dass die gespeicherten Informationen jeweils einer Position oder einer Pose in einer Karte zugeordnet sind. Kartendaten und Karteninformationen beziehen sich also immer auf einen bestimmten Ort oder einen bestimmten Bereich innerhalb eines von der Karte abgedeckten Robotereinsatzgebietes. Eine Karte repräsentiert also eine Vielzahl von Datensätzen mit Kartendaten, und die Kartendaten können beliebige ortsbezogene Informationen enthalten. Hierbei können die ortsbezogenen Informationen in unterschiedlichen Detail- und Abstraktionsgrad gespeichert sein, wobei dieser an eine spezifische Funktion angepasst sein kann. Insbesondere können einzelne Informationen redundant gespeichert sein. Häufig wird eine Zusammenstellung mehrerer Karten, die das gleiche Gebiet betreffen, jedoch in unterschiedlicher Form (Datenstruktur) gespeichert sind, ebenfalls als "eine Karte" bezeichnet.

Basierend auf den (gespeicherten) Kartendaten, den (aktuell gemessenen) Sensordaten und der momentanen Aufgabe des Roboters kann das Navigationsmodul 152 den Pfad des Roboters planen. Hierbei kann es ausreichend sein, Wegpunkte (Zwischenzielpunkte) und Zielpunkte zu bestimmen. Diese Planung kann dann von dem Steuersoftwaremodul 151 in konkrete Antriebskommandos (*drive commands*) übertragen werden. Basierend auf diesen Antriebskommandos wird die Antriebseinheit 170 gesteuert und so der Roboter beispielsweise entlang der Wegpunkte (von Wegpunkt zu Wegpunkt) zu einem Ziel bewegt. Es sei angemerkt, dass der geplante Pfad hierbei ein vollständiges Gebiet, eine Bearbeitungsbahn und/oder unmittelbare kurze Bewegungsabschnitte (einige Zentimeter z.B. beim Umfahren von Hindernissen) umfassen kann.

Ein autonomer mobiler Roboter kann verschieden Betriebsmodi besitzen, die zur Steuerung des Roboters genutzt werden. Der Betriebsmodus bestimmt das (interne und nach außen sichtbare) Verhalten des Roboters. Beispielsweise kann ein Roboter, der mit einer Karte navigiert, einen Betriebsmodus zum Aufbau einer neuen Karte aufweisen. Ein weiterer Betriebsmodus kann für die Zielpunktnavigation vorgesehen sein, d.h. der Roboter navigiert von einem Punkt (z.B. der Basisstation) zu einem zweiten Punkt (Zielpunkt, z.B. eine Position, an der eine Aufgabe gestartet wird, insbesondere eine Reinigungsaufgabe). Weitere Betriebsmodi (d.h. Bearbeitungsmodi, insbesondere Reinigungsmodi) können zur Verrichtung der eigentlichen Aufgabe des Roboters vorgesehen sein.

Ein Roboter kann einen oder mehrere Bearbeitungsmodi zur Bearbeitung der Bodenfläche aufweisen. Das heißt, für die Durchführung einer konkreten (Reinigungs-) Aufgabe wählt der Roboter nach bestimmten Kriterien einen Betriebsmodus, in dem er dann während der Durchführung der Aufgabe arbeitet. Im einfachsten Beispiel wird dem Roboter der zu wählende Bearbeitungsmodus von einem Nutzer zugewiesen. Alternativ oder zusätzlich kann auch eine feste Sequenz von Bearbeitungsmodi abgearbeitet werden (z.B. Erkunden eines (Teil-) Gebiets, Kantenreinigung des (Teil-) Gebiets, Flächenreinigung des (Teil-) Gebiets). Die Bearbeitungsmodi können sich beispielsweise in der Strategie zur Abdeckung der Bodenfläche unterscheiden. Beispielsweise kann der Roboter hierbei zufällig oder systematisch gesteuert werden. Die zufällig gesteuerten Strategien kommen üblicherweise ohne eine Karte aus. Die systematischen Fahrstrategien nutzen in der Regel eine Karte des Robotereinsatzgebietes (oder eines Teils davon), die während der Bearbeitung aufgebaut werden kann oder schon vor Beginn der Bearbeitung bekannt sein kann (z.B. aus einer Lernfahrt oder einem vorhergehenden Einsatz). Typische Beispiele systematischer Fahrstrategien zur Abdeckung der Bodenfläche basieren auf einem dem jeweiligen Betriebsmodus zugeordneten Bewegungsmuster (bei der Bearbeitung/Reinigung auch als Bearbeitungs-/Reinigungsmuster bezeichnet). Ein häufig angewendetes Bewegungsmuster beinhaltet eine Bewegung entlang parallel aneinandergereihte Bahnen (Mäander). Ein weiteres Bewegungsmuster sieht eine Bewegung entlang einer spiralförmigen Bahn vor. Ein weiteres Bewegungsmuster kann das Folgen einer Kontur eines vorgebbaren Gebiets sein, wobei die Kontur aus realen und virtuellen Hindernissen bestehen kann, um z.B. eine wandnahe Bearbeitung zu erreichen.

Zusätzlich oder alternativ können sich die Bearbeitungsmodi durch die Auswahl und den Einsatz der Reinigungswerkzeuge unterscheiden. So kann es beispielsweise einen Betriebsmodus (Teppich-Reinigungsmodus) geben, bei dem eine Saugeinheit mit hoher Saugleistung und schnell rotierenden Bürsten genutzt wird. Daneben kann es einen weiteren Betriebsmodus (Hartboden-Reinigungsmodus) geben, bei dem eine reduzierte Saugleistung und langsamere Bürstenrotation genutzt wird. Zusätzlich kann auf einem Hartboden eine Wischeinheit genutzt werden. Zusätzlich kann abhängig von der Bodenart (z.B. Stein, Holz) eine Reinigungsflüssigkeit (z.B. Wasser) auf den Boden aufgebracht werden oder nicht.

Ein Betriebsmodus (Reinigungsmodus) kann basierend auf den Werten eines Signals eines Sensors zur Erfassung einer Verschmutzung der Bodenfläche (Schmutzsensors) geändert werden. Beispielsweise kann bei einer stark verschmutzen Stelle ein spezieller Betriebsmodus (Spot-Reinigungsmodus) gestartet werden, um eine lokale Verschmutzung zu beseitigen. In diesem Beispiel kann z.B. von einem Betriebsmodus mit mäanderförmigem Bewegungsmuster in einen Betriebsmodus mit (Spot-Reinigungsmodus) mit spiralförmigen Bewegungsmuster gewechselt werden. Allerdings ist ein Wechsel der Bearbeitungsmodi für eine systematische Reinigung störend, da hierdurch die Komplexität der verwendeten Methoden (insbesondere für die Navigation und Bahnplanung) steigt. Es ist somit wünschenswert, eine einfachere Methode zur Berücksichtigung einer erkannten starken Verschmutzung zu nutzen, die sich einfach in einen systematischen Bearbeitungsmodus integriert. Die Vorgehensweise bei der Pfadplanung durch den Roboter kann von dem aktuellen Betriebsmodus abhängen.

Ein Betriebsmodus zum Reinigen einer Bodenfläche (Reinigungsmodus) ist also unter anderem charakterisiert durch das Bewegungsmuster (z.B. Mäander, Spirale, etc.), mit dem der Roboter versucht die aktuell betrachtete Bodenfläche (z.B. ein bestimmtes Zimmer oder einen Teil davon) möglichst vollständig abzudecken, die verwendete Kollisionsvermeidungsstrategie (z.B. Umkehren, das Hindernis umfahren, etc.) sowie der Strategie zur Nachbearbeitung unbearbeiteter (z.B. aufgrund von Hindernissen ausgelassener) Teilflächen der Bodenfläche. Beispielsweise können ausgelassene Bereiche dann angefahren und gereinigt werden, wenn die Durchführung des dem Bearbeitungsmodus zugeordneten Bewegungsmusters (z.B. eine Mäanderbahn) abgeschlossen ist. Andere Ansätze verwenden eine Bearbeitungskarte bzw. Reinigungskarte (*cleaning map*), in der bereits gereinigte Flächen markiert werden, um sie zu einem späteren Zeitpunkt nachbearbeiten zu können. Die hier beschriebenen Ausführungsbeispiele zielen unter anderem darauf ab, bei der Reinigung einen Moduswechsel, insbesondere bei detektierter erhöhter Verschmutzung, möglichst zu vermeiden.

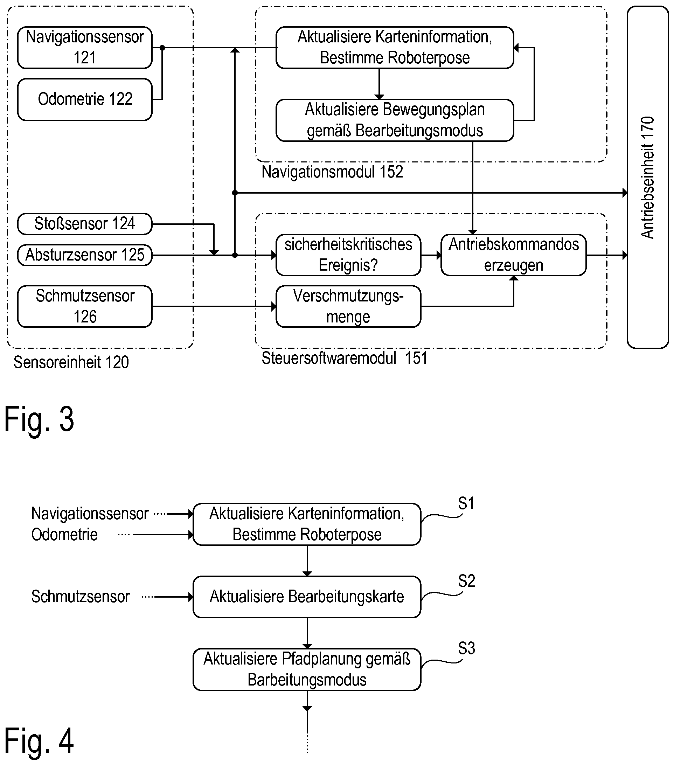

*Reaktion auf Verschmutzung durch reduzierte Geschwindigkeit -* Figur 3 zeigt ein Beispiel, wie ein Sensor zur Erfassung einer Verschmutzung der Bodenfläche (Schmutzsensor) in die Architektur eines autonomen mobilen Roboters integriert werden kann. Im Navigationsmodul 152 werden die Kartendaten (z.B. Lage von Hindernissen, etc.) sowie die Position des Roboters basierend auf (von einem in der Sensoreinheit 120 enthaltenen Navigationssensor 121 gelieferten) Informationen über die Umgebung des Roboters und mittels Odometrie aktualisiert (z.B. gemäß einem SLAM-Verfahren, siehe auch weiter unten Fig. 4, Schritt S1). Für die Odometrie kann die Sensoreinheit 120 des Roboters 121 einen Odometer 122 (z.B. Wheel-Encoder, optische Odometer, etc.) aufweisen. Anschließend wird die Pfadplanung des Roboters gemäß dem aktuellen Betriebsmodus (Bearbeitungsmodus, Reinigungsmodus, etc.) aktualisiert. Der Pfadplanung liegt das dem aktuellen Betriebsmodus zugeordnete Bewegungsmuster zugrunde, die im jeweiligen Betriebsmodus verwendete Kollisionsvermeidungsstrategie (z.B. Umkehren, an der Kontur des Hindernisses entlang fahren, etc.), sowie die verwendete Strategie zur Nachbearbeitung ausgelassener Teilflächen. Die Pfadplanung kann beispielsweise die Bestimmung von Wegpunkten zu einem Ziel, die Festlegung von Pfadsegmenten, Bewegungsvektoren und/oder sonstige Elemente zur Beschreibung eines Pfades des Roboters durch das Robotereinsatzgebiet enthalten. Die Dynamik des Roboters (insbesondere Geschwindigkeit und Beschleunigung) beim Abfahren dieses Pfades kann für Haushaltsroboter bei der Pfadplanung üblicherweise vernachlässigt werden (im Unterschied zu großen sich schnell bewegenden Robotern wie beispielsweise selbstfahrenden Automobile). Die Aktualisierung der Pfadplanung kann auch beinhalten, zu prüfen, ob der Roboter sich noch auf einem zuvor geplanten Pfad befindet. Bei Abweichungen (insbesondere größer als eine Toleranz) kann bestimmt werden, wie der Roboter auf den geplanten Pfad zurückkehren kann. Zusätzlich kann die Aktualisierung der Pfadplanung prüfen, ob ein zuvor geplanter Pfad kollisionsfrei ausgeführt werden kann. Beispielsweise kann so einem zuvor nicht vorhandenen Hindernis oder einem in der Pfadplanung nicht berücksichtigten Hindernis ausgewichen werden. Nach Abschluss der Aktualisierung der Pfadplanung, kann der erste Schritt im Navigationsmodul 152 (Aktualisieren von Kartendaten und Roboterposition) wiederholt werden.

Die Ergebnisse der Pfadplanung des Navigationsmoduls 152 werden an das Steuersoftwaremodul 151 weitergeleitet, welches nach vorgebbaren Regeln die Antriebkommandos für die Antriebseinheit 170 erstellt. Beispielsweise besteht die Antriebseinheit 170 aus zwei auf einer Achse liegenden unabhängig angetriebenen Rädern (Differentialantrieb). Ein solcher Antrieb und seine Steuerung zum Folgen eines Pfades sind an sich bekannt. Beispielsweise wird eine geradlinige Bewegung erzeugt, wenn beide Räder mit der gleichen Geschwindigkeit angetrieben werden. Eine Drehung um den Mittelpunkt zwischen beiden Rädern erfolgt, wenn beide Räder sich mit der betragsmäßig gleichen Geschwindigkeit gegenläufig drehen. Andere Antriebseinheiten 170 wie andere Antriebe mit Rädern, Kettenantrieben oder Beinen sind an sich bekannt.

Bei der Erzeugung der Antriebskommandos durch das Steuersoftwaremodul 151 sollten bestimmte Beschränkungen (*constraints*) beachtet werden. Beispielsweise können und/oder dürfen die Beschleunigungen, denen der Roboter ausgesetzt ist, einen gewissen Wert nicht überschreiten. Ein weiteres Beispiel ist das Festlegen einer maximalen Geschwindigkeit. Diese Beschränkungen können beispielsweise durch die verwendeten Bauteile des Roboters, aber auch durch die Umgebung des Roboters vorgegeben sein. Beispielsweise kann beim Betreiben der verwendeten Motoren eine nicht zu überschreitende maximalen Drehzahl und/oder Leistung beachtet werden, um eine dauerhafte Funktion zu gewährleisten. Die maximale Geschwindigkeit wird beispielsweise bei langen Geradeausfahrten erreicht. Bei Kurvenfahrten und/oder beim Ausweichen von Hindernissen wird in der Regel eine geringere Geschwindigkeit erreicht. Insbesondere kann die Geschwindigkeit der Bewegung abhängig von der notwendigen Genauigkeit der Ausführung der Bewegung reduziert sein.

Zusätzlich kann das Steuersoftwaremodul 151 sicherheitsrelevante Funktionen beinhalten. Derartige sicherheitskritische Funktionen können Reaktionen des Roboters auf sicherheitskritische Ereignisse (detektierte Gefahrensituationen) auslösen (z.B. Notbremsung, Ausweichmanöver, etc.). Mögliche sicherheitskritische Ereignisse sind z.B. die Detektion einer Kollision mittels eines Sensors (Stoßsensor 124, *Bumper*) oder die Detektion einer Absturzkante mittels eines weiteren Sensors (Absturzsensor 125, *Drop-Sensor*)*.* So kann eine mögliche Reaktion auf einen detektierten Zusammenstoß oder auf eine detektierte Absturzkante ein sofortiges Stoppen des Roboters sein (Not-Halt). Zusätzlich kann der Roboter anschließend um eine vorgebbare Distanz zurückfahren (ca. 1-5 cm), um einen Sicherheitsabstand zu dem Hindernis (bzw. der Absturzkante) herzustellen. Das Navigationsmodul 152 muss sich nicht um diese standardisierte Reaktion auf sicherheitskritische Ereignisse kümmern. Es ist ausreichend, dass das Navigationsmodul 152 die aktuelle Position des Roboters und die Lage der durch die Sensoren (*Bumper*, bzw. *Drop-Sensor*) detektierten Hindernisse bestimmen kann, und somit für die Anpassung und/oder neue Ermittlung eines Pfades nutzen kann.

Damit ein Roboter zur Bearbeitung einer Bodenfläche besonders stark verschmutzte Bereiche erkennen und diese intensiver bearbeiten kann, kann er mit einem Sensor zur Erfassung einer Verschmutzung der Bodenfläche (Schmutzsensor 126, *dirt sensor*) ausgestattet sein. Eine einfache Art, eine Fläche intensiver zu reinigen, ist die Reduzierung der Geschwindigkeit des Roboters, so dass die verschmutzte Fläche längere Zeit bearbeitet wird. Die Reduzierung der Geschwindigkeit kann hierbei unmittelbar bei der Erzeugung der Antriebskommandos durch das Steuersoftwaremodul 151 erfolgen. Hierdurch muss das Navigationsmodul 152 nicht über die Verschmutzung gesondert informiert werden. Eine entsprechende Anpassung des Bearbeitungsmodus und insbesondere der Bearbeitungsstrategie ist nicht nötig. Hierdurch wird eine schnelle und unmittelbare Reaktion auf eine stark verschmutzte Stelle ermöglicht. Insbesondere kann hierdurch eine vergleichbar schnelle Reaktion wie bei sicherheitskritischen Ereignissen ermöglicht werden. Zusätzlich oder alternativ zur Fahrgeschwindigkeit kann auch die Fahrtrichtung des Roboters geändert werden. Beispielsweise kann ein Stück zurück fahren und dann wieder vorwärts fahren, um den durch dieses Manöver abgedeckten Bodenbereich mehrfach zu reinigen. Zusätzlich oder alternativ kann auch die aktuell geplante Trajektorie modifiziert werden (wodurch ebenfalls die Fahrtrichtung geändert wird). Die Modifikation kann z.B. so erfolgen, dass (durch den durch die Modifikation der Trajektorie verursachten "Umweg") der als stark verschmutzt erkannte Bodenbereich mehrfach abgedeckt wird und anschließend die ursprünglich geplante Trajektorie weitergefahren wird.

Beispielsweise kann bei einer detektierten starken Verschmutzung die Geschwindigkeit dadurch angepasst werden, dass die zulässige maximale Geschwindigkeit von einem ersten Wert v₁ auf eine zweite maximale Geschwindigkeit v₂ geändert wird. Insbesondere kann die maximale Geschwindigkeit reduziert werden (v₂<v₁, z.B. v₂ = 0,5-vi). Hierdurch wird insbesondere die Geschwindigkeit bei langen Geradeausfahrten deutlich reduziert. In Bereichen, in denen der Roboter beispielsweise aufgrund von Hindernissen langsamer fahren muss, würde die Geschwindigkeit nur reduziert, wenn diese größer als die neu festgelegte maximale Geschwindigkeit v₂ ist. Eine unnötige zusätzliche Verlangsamung des Roboters wird hierdurch vermieden. Die reduzierte maximale Geschwindigkeit v₂ kann beispielsweise so lange beibehalten werden, wie der Zustand starker Verschmutzung von dem Schmutzsensor detektiert wird. Alternativ oder zusätzlich kann die reduzierte maximale Geschwindigkeit v₂ eine vorgebbare Zeit lang (z.B. 5 Sekunden) oder für eine vorgebbare Strecke (z.B. 5 cm) beibehalten werden, nachdem der Zustand starker Verschmutzung wieder in den Zustand normaler Verschmutzung gewechselt ist. Anschließend wird die maximale Geschwindigkeit wieder auf ihren ursprünglichen Wert v₁ gesetzt. Diese Reaktion auf eine erhöhte Verschmutzung hat keinen Einfluss auf die Arbeit des Navigationsmoduls, insbesondere die Pfadplanung und/oder die Aktualisierung der Pfadplanung.

Ein weiteres Beispiel für die Änderung der Geschwindigkeit bei einer detektierten starken Verschmutzung ist das Stoppen des Roboters, wenn ein Wechsel von einem Zustand normaler Verschmutzung auf einen Zustand starker Verschmutzung detektiert wird. Dies kann beispielsweise analog zu der Reaktion auf eine detektierte Kollision oder eine detektierte Absturzkante gemacht werden (z.B. Not-Halt). Hierdurch ist eine schnelle Reaktion auf eine stark verschmutzte Stelle gewährleistet.

Zusätzlich oder alternativ kann der Roboter zurücksetzen. Das heißt, die Fahrtrichtung wird umgekehrt. Beispielsweise kann der Roboter um eine vorgebbare Distanz (z.B. 5 cm) direkt vom Steuersoftwaremodul zurück gesteuert werden. Dies kann in Analogie zur Reaktion auf eine detektierte Kollision oder eine detektierte Absturzkante geschehen. Insbesondere wird keine aufwändige Planung durch das Navigationsmodul 151 benötigt. Dieses kann wie zuvor basierend auf dem Bearbeitungsmodus und der zugrundeliegenden Bearbeitungsstrategie als auch der Roboterposition und den Karteninformationen die Pfadplanung für den Roboter übernehmen, ohne eine eventuell vorhandene erhöhte Verschmutzung berücksichtigen zu müssen. Das Zurücksetzen hat den Vorteil, dass eine Verzögerung beim Detektieren der starken Verschmutzung ausgeglichen wird und ein potentiell stärker verschmutzter Bereich nochmals bearbeitet wird.

Bevor der Roboter in Rückwärtsrichtung gesteuert wird, muss er stoppen. Dies kann in einem abrupten Bremsmanöver analog zu einer Gefahrensituation geschehen. Alternativ kann dies mit einem langsamen Abbremsen und Beschleunigen (in die Gegenrichtung) erfolgen, wodurch der optische Eindruck einer "sanfteren" Vor- und Zurückbewegung entsteht. Ein solches Fahrmanöver kann ebenfalls analog zu der Reaktion auf eine Gefahrensituation (Stoppen und Rückwärtsfahren) als Standardreaktion implementiert sein. Hierfür ist somit ebenfalls keine Anpassung des im Navigationsmodul 152 implementierten Bearbeitungsmodus notwendig.

Beim Zurücksetzen kann der Roboter geradlinig rückwärtsfahren oder entlang der zuletzt gefahrenen Trajektorie. Letzteres geschieht beispielsweise durch ein Invertieren der zuletzt erzeugten Antriebskommandos. Die Distanz und oder die Zeitdauer für die Rückwärtsbewegung kann ein voreingestellter Wert sein. Alternativ können Sensormessungen als Bedingung für das Stoppen der Rückwärtsbewegung und die Wiederaufnahme der normalen Bewegung genommen werden. Beispielsweise kann das Signal des Schmutzsensors genutzt werden. Beispielsweise kann soweit zurückgesetzt werden, bis das detektierte Signal für die Verschmutzung wieder unter einen vorgebbaren Schwellwert sinkt oder eine Kollision mit einem Hindernis droht. In einem Beispiel fährt der Roboter solange zurück, bis der Schmutzsensor keine erhöhte Verschmutzung mehr feststellt und anschließend noch eine definierte Strecke (oder Zeitdauer). Während der Rückwärtsbewegung kann die Kollisionsvermeidung aktiv sein.

In einer alternativen Ausgestaltung kann auch das Navigationsmodul 151 über die Verschmutzung informiert werden und eine Pfadplanung für die Rückwärtsbewegung des Roboters durchführen. Dies hat den Vorteil, dass Hindernisse die hinter dem Roboter liegen können, bei der Steuerung des Roboters beachtet werden können. Alternativ oder zusätzlich, kann die Rückwärtsbewegung, wie zuvor beschrieben, durch das Steuersoftwaremodul 152 gesteuert werden, wobei die Bewegung zusätzlich durch ein Sicherheitsüberwachungsmodul überwacht wird. Das Sicherheitsüberwachungsmodul kann ein Stoppen der Bewegung veranlassen, wenn beispielsweise eine Kollision mit einem Hindernis oder ein Sturz in einen Abgrund droht. Das Sicherheitsüberwachungsmodul kann ein eigenständiges Modul oder ein Teil des Steuersoftwaremodul 151 sein und arbeitet unabhängig von dem Navigationsmodul 152.

Nach dem Stoppen des Roboters und/oder der Rückwärtsbewegung kann der Roboter sich wieder vorwärts bewegen. Hierbei kann beispielsweise wie zuvor beschrieben eine reduzierte Geschwindigkeit für zumindest eine vorgebbare Distanz oder Zeitdauer genutzt werden. Alternativ oder zusätzlich kann bei jeder erneuten Detektion einer starken Verschmutzung die Rückwärtssteuerung des Roboters aktiviert werden, was zu einer fortwährenden pendelnden Bewegung führt, analog zu dem Vorgehen eines Menschen bei der Bearbeitung einer starken Verschmutzung.

*Reaktion auf Verschmutzung durch Nicht-Kennzeichnung in Bearbeitungskarte -* Eine alternativer Ansatz zur Steuerung eines autonomen mobilen Roboters zur Bearbeitung einer Bodenfläche in Reaktion auf das Signal eines Schmutzsensors nutzt eine Bearbeitungskarte (z.B. Reinigungskarte, *cleaning map*). In einer Bearbeitungskarte werden alle schon bearbeiteten Bereiche markiert. Diese kann beispielsweise dem Nutzer angezeigt werden, so dass dieser einen Überblick über die Tätigkeit des Roboters erhält. Gleichzeitig kann diese Karte vom Roboter genutzt werden, um zu erkennen, welche Bereiche noch bearbeitet werden müssen. So können beispielsweise Bereiche, die aufgrund der Position von Hindernissen noch nicht bearbeitet wurden, identifiziert werden. Diese noch nicht bearbeiteten Bereiche können - unter Unterbrechung eines momentanen Bearbeitungsmusters - in die aktuelle Bearbeitung mit einbezogen werden, wenn der Roboter an diesen vorbei fährt. Alternativ kann nach Abschluss der Bearbeitung eines Bereichs gemäß einem Bearbeitungsmuster (das vom Betriebsmodus abhängt) basierend auf der Bearbeitungskarte ein noch nicht bearbeiteter Bereich identifiziert und zur Bearbeitung angesteuert werden. Solche Verfahren sind an sich bekannt.

Figur 4 zeigt ein Beispiel eines Ansatzes zur Steuerung eines autonomen mobilen Roboters abhängig von den Signalen eines Schmutzsensors ohne einen Wechsel des der aktuellen Bearbeitungsstrategie zugrundeliegenden Bearbeitungsmodus. Hierbei werden in einem ersten Schritt (Fig. 4, S1) basierend auf den vom Navigationssensor gelieferten Informationen über die Umgebung des Roboters und des Odometrie-Sensors des Roboters die Kartendaten betreffend die Umgebung und die Roboterposition aktualisiert. Im zweiten Schritt (Fig. 4, S2) wird die Bearbeitungskarte (z.B. Reinigungskarte, *cleaning map*) aktualisiert. Dafür werden beispielsweise jene Bereiche zwischen der letzten bekannten Position des Roboters und der im vorhergehenden Schritt S1 ermittelten Position als bearbeitet markiert. Dabei kann die Position der Bearbeitungseinheit (am Roboter) berücksichtigt werden. Beim Markieren von Bereichen als bearbeitet (oder nicht bearbeitet) in der Bearbeitungskarte können vom Schmutzsensor gelieferte Daten berücksichtigt werden. Anschließend wird der zu fahrende Pfad des Roboters gemäß den Vorgaben des aktuellen Bearbeitungsmodus aktualisiert. Beispielsweise kann die dem aktuellen Bearbeitungsmodus zugeordnete Strategie zur Nachbearbeitung ausgelassener Flächen vorsehen, dass diese dann nachbearbeitet werden, wenn der Roboter das nächste Mal an der ausgelassenen Stelle vorbeikommen, während er sich gemäß dem in dem jeweiligen Modus verwendeten Bewegungsmuster (z.B. Mäander) bewegt.

Hierbei kann insbesondere eine Fläche dann als bearbeitet markiert werden, wenn der Schmutzsensor für diese Fläche keine oder eine normale Verschmutzung detektiert. Wenn hingegen eine starke Verschmutzung festgestellt wird, so wird die betreffende Fläche in der Bearbeitungskarte als solche markiert. Derart markierte Flächen werden nochmals bearbeitet. Im einfachsten Fall geschieht die nochmalige Bearbeitung dadurch, dass die betreffende Fläche als "nicht bearbeitet" markiert wird. Sie hat also die gleiche Markierung wie ein noch nicht befahrener Bereich der Bodenfläche. Diese Vorgehensweise hat den Effekt, dass gemäß einer Bearbeitungsstrategie zur systematischen und vollständigen Abdeckung der Bodenfläche, dieser Bereich als noch nicht bearbeitet erkannt wird, weshalb diese später automatisch nochmals angesteuert wird (entsprechend der im jeweiligen Bearbeitungsmodus verwendeten Strategie zur Nachbearbeitung nicht bearbeiteter Flächen). Eine Änderung oder Anpassung der Bearbeitungsstrategie und der Bahnplanung, die eine detektierte starke Verschmutzung direkt berücksichtigt, ist nicht notwendig.

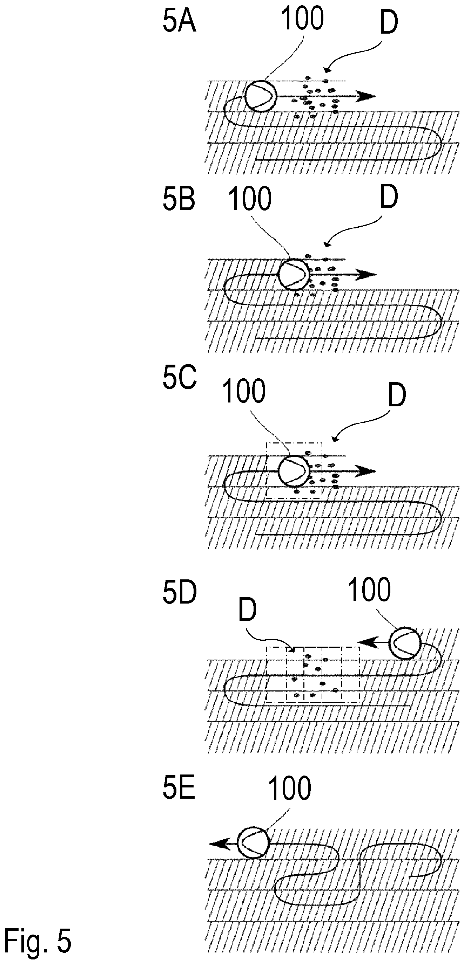

Figur 5 zeigt exemplarisch ein Beispiel eines Ablaufs der Bearbeitung der Bodenfläche und die korrespondierende Markierung in einer Bearbeitungskarte. Fig. 5A zeigt den Roboter 100 wie er systematisch mit mäanderförmig aneinander gereihten Bahnen die Bodenfläche bearbeitet. Die in der Bearbeitungskarte als "bearbeitet" markierten Bereiche sind schraffiert dargestellt. In dem dargestellten Beispiel fährt der Roboter auf einen lokal stark verschmutzten Bereich D zu. In der in Fig. 5B dargestellten Situation hat der Roboter 100 den stark verschmutzten Bereich D erreicht und wird diesen folglich mittels des Schmutzsensors detektieren.

Als Reaktion auf die Detektion des stark verschmutzten Bereichs D wird zum einen die aktuelle Position des Roboters nicht als "bearbeitet" markiert werden; zum anderen können Bereiche, die zuvor als "bearbeitet" markiert wurden, wieder als "nicht bearbeitet" (oder als "nachzubearbeiten") markiert werden, sodass sie später nochmals bearbeitet werden. In dem in Fig. 5C dargestellten Beispiel sind jene Bereiche (z.B. mit fest definierter Breite), die unmittelbar neben dem Roboter und hinter dem Roboter 100 an diesen angrenzen, wieder als "nicht bearbeitet" markiert. Dies hat den Vorteil, dass Randbereiche des stark verschmutzten Bereichs D, die zuvor eventuell nicht erkannt wurden, ebenfalls nochmals bearbeitet werden. Beispielsweise wird ein Quadrat mit einer Seitenlänge von zwei Roboterdurchmessern, dessen Mittelpunkt dem Robotermittelpunkt entspricht, als "nicht bearbeitet" markiert (siehe strichpunktiertes Quadrat in Fig. 5C). Es sei angemerkt, dass die Bereiche, die als bearbeitet markiert werden, in der Regel an die Form, Größe und Lage der Bearbeitungseinheit im/am Roboter angepasst sind. Analog werden die Bereiche, die in Folge einer erkannten starken Verschmutzung als "nicht bearbeitet" markiert werden, zumindest teilweise an Form, Größe und Lage der Bearbeitungseinheit angepasst.

Figur 5D zeigt den Roboter 100 auf der nächsten Reinigungsbahn des Mäandermusters. Der zuvor als stark verschmutzt erkannte Bereich D ist als "nicht bearbeitet markiert" (siehe Fig. 5D, strichpunktierte Quadrate). Dies wird vom Roboter 100 basierend auf der Bearbeitungskarte erkannt. Entsprechend wird der Roboter 100, wenn er diesen als "nicht bearbeitet" markierten Bereich D erreicht, diesen nochmals bearbeiten. Fig. 5E zeigt ein mögliches, bei der erwähnten nochmaligen Bearbeitung des Bereichs D entstehendes Bearbeitungsmuster. In einer alternativen Ausgestaltung kann der Roboter auch die Bahn wie in Fig. 5D skizziert geradlinig durchfahren und am Ende des mäanderförmigen Bearbeitungsmusters zu dem noch als "nicht bearbeitet" markierten Bereich D zurückkehren, wodurch der Bereich D nochmals bearbeitet wird. Durch die zweimalige Bearbeitung wird die Reinigungsleistung in dem stark verschmutzten Bereich D deutlich erhöht. Eine spezielle Anpassung des Bearbeitungsmodus ist nicht notwendig, da eine inhärente Eigenschaft einer systematischen kartenbasierten Bearbeitungsstrategie (Erkennen und Bearbeiten ausgelassener Bereiche) ausgenutzt wird.

*Intensitätskarte* - Die bisher beschriebenen Verfahren zur Steuerung eines autonomen mobilen Roboters zielen darauf ab, einzelne Bereiche (insbesondere solche, die als stark verschmutzt erkannt wurden) intensiver zu reinigen als andere Bereiche. Wenn einzelne Bereiche wiederholt einer solchen intensiven Reinigung unterzogen werden müssen, so ist dies eine wertvolle Information, die genutzt werden kann, um den Einsatz des Roboters langfristig zu optimieren und besser an die Bedürfnisse des Nutzers anzupassen. Hierzu muss diese Information systematisch erfasst und analysiert werden.

Ein erster Schritt hierzu ist die Erfassung der tatsächlichen lokalen Bearbeitungsintensität in einer Karte. Dies bedeutet, dass für alle Positionen eines Einsatzgebietes erfasst wird, ob diese bearbeitet wurden (falls nein ist die Intensität der Bearbeitung null), und mit welcher Intensität dies geschieht.

Ein Maß für die Intensität kann z.B. die Dauer der Bearbeitung sein, wenn der Roboter beispielsweise auf einer stark verschmutzen Stelle stoppt oder vor- und zurückfährt. Zusätzlich oder alternativ kann die Häufigkeit der Bearbeitung ein Maß für die Intensität sein oder zur Intensität beitragen, falls der Roboter beispielsweise mehrmals eine stark verschmutzte Stelle befährt. Auch die Geschwindigkeit der Bearbeitung kann ein Maß für die Intensität sein oder zur Intensität beitragen, falls der Roboter beispielsweise eine Stelle mit reduzierter Geschwindigkeit befährt. Schließlich kann auch die Bearbeitungsleistung während der Bearbeitung ein Maß für die Intensität sein oder zur Intensität beitragen, falls beispielsweise die Saugleistung des Roboters erhöht wird. Wird eine Fläche langsamer bearbeitet, verbringt der Roboter mehr Zeit auf dieser Fläche; wird eine Fläche mehrfach bearbeitet, verbringt der Roboter ebenfalls mehr Zeit auf der betreffenden Fläche. Ein Maß für die Intensität der Bearbeitung (Reinigung) kann demnach das Produkt aus der Bearbeitungszeit eines Flächenabschnittes und der verwendeten Bearbeitungsleistung (z.B. Saugleistung einer Saugeinheit, allgemein: möglicher Schmutzabtransport pro Zeiteinheit). Dieses Produkt (Zeit mal Bearbeitungsleistung) kann auch als die "Arbeit" betrachtet werden, die bei der Bearbeitung einer Flächeneinheit der Bodenfläche erbracht wurde.

Eine einfache Möglichkeit, eine solche Intensitätskarte zu erstellen, besteht beispielsweise darin, in regelmäßigen Abständen (z.B. einmal je Sekunde) die aktuelle Position des Roboters zu speichern. Hierdurch entsteht eine Karte mit einer Punktwolke. In Bereichen in denen sich der Roboter öfters befunden hat und/oder in denen er sich länger aufgehalten hat (z.B. aufgrund reduzierter Geschwindigkeit) liegen die Punkte der gespeicherten Roboterpositionen dichter als an anderen Stellen. Die räumliche Dichte (Punkte pro Flächeneinheit) der so gespeicherten Roboterpositionen ist somit ein mögliches Maß für die Intensität der Bearbeitung.

Der Grund für eine stärkere Intensität der Bearbeitung kann (wie zuvor beschrieben) die Reaktion auf die von einem Schmutzsensor gelieferten Daten sein, wodurch ein als stark verschmutzt erkannter Bereich mehrmals und/oder langsamer bearbeitet wird.

Ein weiterer Grund einer erhöhten Intensität der Bearbeitung kann in den Informationen über die Umgebung des Roboters liegen, die ein Navigationssensor liefert. So kann beispielsweise die Geschwindigkeit in der Nähe von Hindernissen und insbesondere bei einer wandnahen Reinigung und/oder einer Eckenreinigung reduziert sein. Dies hat den Vorteil, dass durch die reduzierte Geschwindigkeit eine genauere Navigation ermöglicht wird. Hierdurch kann näher an Hindernissen und in Ecken gereinigt werden. Zudem wird zusätzlich die Reinigungsleistung erhöht, so dass sich in Ecken und Kanten gesammelter Schmutz besser beseitigt wird.

Ein weiterer Grund zur intensiveren Bearbeitung eines Bereichs ist eine explizite Nutzeranweisung. Beispielsweise kann der Nutzer den Roboter 100 anweisen (z.B. über die Mensch-Maschine-Schnittstelle 200, siehe Fig. 2), den Bereich in dem er sich gerade befindet, intensiver zu bearbeiten und/oder die Bearbeitung zu wiederholen. Alternativ oder zusätzlich kann der Nutzer den Roboter anweisen einen Raum (z.B. Flur) oder einen Bereich (z.B. Essecke) gründlicher und intensiver zu reinigen. Hierzu können beispielsweise die Kartendaten des Roboters in Form eines Grundrisses des Robotereinsatzgebietes auf einem HMI (z.B. Tablet) angezeigt werden. Der Nutzer kann dann direkt in der angezeigten Karte die intensiver zu bearbeitenden Bereiche markieren. Beispielsweise kann der Nutzer ein Reinigungsprogram (Bearbeitungsmodus) wählen, dass eine intensivere Bearbeitung der Bodenfläche durchführt.

Zusätzlich können in der Karte hinterlegte Informationen den Roboter veranlassen, eine Stelle oder einen Bereich intensiver zu bearbeiten. Beispielsweise kann dies eine vom Nutzer eingegebene Information sein, wie z.B. eine explizite Anweisung, einen Raum (oder einen Teil davon) intensiver zu bearbeiten. Alternativ oder zusätzlich können auch indirekte Informationen wie die Benennung von Räumen (z.B. "Küche"), Bereichen (z.B. "Eingangsbereich") und/oder Gegenständen (z.B. "Tisch") beispielsweise durch den Nutzer genutzt werden, um eine Intensität der Bearbeitung anzupassen. Beispielsweise kann aus einer Bezeichnung eines Raumes als "Küche" oder der Bezeichnung eines Bereiches als "Eingangsbereich" oder "Essecke" abgeleitet werden, dass hier ein besonders hoher Reinigungsbedarf ist.

Darüber hinaus können Informationen über die Notwendigkeit einer intensiven Bearbeitung durch den Roboter erlernt werden. Beispielsweise kann der Roboter feststellen, dass ein Bereich aufgrund einer stärkeren Verschmutzung immer intensiver gereinigt werden muss als andere Bereiche. Hierzu kann beispielsweise die Intensitätskarte nach jedem Bearbeitungseinsatz gespeichert werden. Die gespeicherten Karten können dann auf Muster und ihre Veränderung im Verlauf von mehreren Bearbeitungseinsätzen hin analysiert werden. So kann beispielsweise erkannt werden, dass in einem Raum bei fast jedem Bearbeitungseinsatz zumindest teilweise eine intensivere Bearbeitung notwendig ist. Basierend hierauf kann der Roboter selbstständig oder nach Bestätigung durch den Nutzer diesen Raum als Ganzes oder Teile hiervon immer in einem intensiveren Bearbeitungsmodus bearbeiten. Alternativ kann dem Nutzer auch vorgeschlagen werden den Raum öfters zu reinigen. Beispielsweise kann eine tägliche Bearbeitung vorgeschlagen werden, wenn diese bisher nur alle zwei Tage erfolgt.

Alternativ zum Speichern der gesamten Intensitätskarte kann es ausreichend sein, jene Bereiche mit einer besonders intensiven Bearbeitung (beispielsweise auf Grund einer starken Verschmutzung) nach einem Bearbeitungseinsatz zu ermitteln und diese zu speichern. Beispielsweise werden die Bereiche und/oder Positionen gespeichert, deren Bearbeitungsintensität größer als ein Mindestwert, der Mittelwert der gesamten Intensität, und/oder der Intensität eines Standard-Bearbeitungsmodus entspricht.

Eine solche Intensitätskarte kann als Ersatz für eine Bearbeitungskarte und eine Verschmutzungskarte (also eine Karte, in der verschiedenen Positionen oder Bereichen im Einsatzgebiet jeweils die mit einem Sensor ermittelte Verschmutzung der Bodenfläche zugeordnet ist) dienen. Alternativ kann sie eine gute Ergänzung zu diesen Karten sein, um dem Nutzer benötigte Informationen einfacher und direkter darzustellen und das selbstständige Lernverhalten des Roboters zu verbessern.

## Patentansprüche

1. Verfahren zur Steuerung eines autonomen mobilen Roboters (100), das folgendes umfasst:
Steuern des Roboters (100) in einem Bearbeitungsmodus zum Bearbeiten einer Bodenfläche mit einem Bodenbearbeitungsmodul (160) des Roboters (100),
Erfassen eines die Verschmutzung der Bodenfläche repräsentierenden Schmutzsensorsignals mittels eines am Roboter angeordneten Schmutzsensors (126),
Ändern der Geschwindigkeit des Roboters (100) basierend auf dem Schmutzsensorsignal während der Bearbeitung der Bodenfläche,
wobei das Schmutzsensorsignal abhängig von der Verschmutzung der Bodenfläche einen ersten Zustand und einen zweiten Zustand annehmen kann,
wobei der erste Zustand des Schmutzsensorsignals eine normale Verschmutzung und der zweite Zustand des Schmutzsensorsignals eine starke Verschmutzung anzeigt, wobei die zwei Zustände basierend auf einem Schwellenwert von detektierten Schmutzpartikeln unterschieden werden,
wobei als Reaktion auf den zweiten Zustand des Schmutzsensorsignals die Geschwindigkeit des Roboters von einem ersten Wert auf einen zweiten Wert reduziert wird.

2. Verfahren gemäß Anspruch 1,
wobei dem Bearbeitungsmodus eine maximale Geschwindigkeit des Roboters zugeordnet ist, und
wobei die maximale Geschwindigkeit abhängig von dem Zustand des Schmutzsensorsignals ist.

3. Verfahren gemäß Anspruch 1 oder 2,
wobei nach dem Reduzieren der Geschwindigkeit diese nach mindestens einem vorgebbaren Kriterium wieder auf den ersten Wert zurückgesetzt wird.

4. Verfahren gemäß Anspruch 3,
wobei das mindestens eine vorgebbare Kriterium zumindest eines der folgenden umfasst: das Schmutzsensorsignal nimmt wieder den ersten Zustand an, das Schmutzsensorsignal nimmt wieder den ersten Zustand an und es ist seither eine vorgebbare Zeit vergangen; das Schmutzsensorsignal nimmt wieder den ersten Zustand an und der Roboter ist seither eine definierte Strecke gefahren; seit der Reduktion der Geschwindigkeit ist eine vorgebbare Zeitdauer vergangen, seit der Reduktion der Geschwindigkeit ist der Roboter (100) eine vorgebbare Strecke gefahren.

5. Verfahren nach einem der Ansprüche 1 bis 4,
wobei der Roboter (100) als Reaktion auf den Wechsel des Schmutzsensorsignals vom ersten in den zweiten Zustand stoppt.

6. Verfahren nach einem der Ansprüche 1 bis 5,
wobei der Roboter (100) als Reaktion auf den Wechsel des Schmutzsensorsignals vom ersten in den zweiten Zustand zurücksetzt.

7. Verfahren nach Anspruch 6,
wobei das Zurücksetzen dadurch erreich wird, dass der Roboter (100) eine vorgebbare Distanz und/oder Zeitdauer entweder geradlinig zurückfährt oder entlang jener Trajektorie zurückfährt, auf der er gekommen ist.

8. Verfahren nach den Ansprüchen 6 und 7,
wobei beim Zurücksetzen Hindernisse derart berücksichtigt werden, dass es zu keiner Kollision kommt.

9. Verfahren nach einem der Ansprüche 6 bis 8,
wobei der Roboter (100) Informationen betreffend die Lage von Hindernissen in einer Karte speichert, und beim Zurücksetzen die in der Karte hinterlegten Informationen zur Vermeidung von Kollisionen nutzt und keine aktuellen Sensorinformation über Hindernisse genutzt werden.

10. Verfahren nach einem der Ansprüche 5 bis 9,
wobei nach dem Stopp oder nach dem Zurücksetzen der Bearbeitungsmodus in die normale Fahrtrichtung mit reduzierter Geschwindigkeit fortgesetzt wird.

11. Verfahren gemäß einem der Ansprüche 1 bis 10,
wobei - in dem Bearbeitungsmodus - der Roboter (100) sich mit einer Geschwindigkeit über die Bodenfläche bewegt, die kleiner oder gleich einer dem Bearbeitungsmodus zugeordneten maximalen Geschwindigkeit ist, und wobei
das Ändern der Geschwindigkeit des Roboters (100) dadurch erreicht wird, dass die maximale Geschwindigkeit reduziert wird.

12. Verfahren nach einem der Ansprüche 1 bis 11, wobei das Steuern des Roboters in einem Bearbeitungsmodus umfasst:
Durchführen einer Pfadplanung basierend auf Karteninformationen und der Roboterposition gemäß einer dem Bearbeitungsmodus zugeordneten Bewegungsmuster, einer dem Bearbeitungsmodus zugeordneten Hindernisvermeidungsstrategie und einer dem Bearbeitungsmodus zugeordneten Strategie zur Nachbearbeitung nicht bearbeiteter Flächen;
Umwandeln des geplanten Pfades in Antriebskommandos.

13. Autonomer mobiler Roboter (100) mit einer Steuereinheit (150), die dazu ausgebildet ist, den Roboter zu veranlassen, ein Verfahren gemäß einem der vorhergehenden Ansprüche auszuführen.

## Claims

1. A method of controlling an autonomous mobile robot (100), comprising:
controlling the robot (100) in a processing mode for processing a floor surface with a floor processing module (160) of the robot (100),
detecting a soiling sensor signal representing the soiling of the floor surface by means of a soiling sensor (126) arranged on the robot,
changing the speed of the robot (100) based on the soiling sensor signal while processing the floor surface,
wherein the soiling sensor signal can assume a first state and a second state depending on the soiling of the floor surface,
wherein the first state of the soiling sensor signal indicates normal soiling and the second state of the soiling sensor signal indicates heavy soiling, wherein the two states are distinguished based on a threshold of detected dirt particles,
wherein in response to the second state of the soiling sensor signal, the speed of the robot is reduced from a first value to a second value.

2. The method according to claim 1,
wherein a maximum speed of the robot is assigned to the processing mode, and
wherein the maximum speed depends on the state of the soiling sensor signal.

3. The method according to claim 1 or 2,
wherein after the speed has been reduced, it is reset to the first value according to at least one predefinable criterion.

4. The method according to claim 3,
wherein the at least one predefinable criterion comprises at least one of the following: the soiling sensor signal assumes the first state again, the soiling sensor signal assumes the first state again and a predefinable time has elapsed since then; the soiling sensor signal assumes the first state again and the robot has traveled a defined distance since then; a predefinable period of time has elapsed since the speed was reduced, and the robot (100) has traveled a predefinable distance since the speed was reduced.

5. The method according to any one of claims 1 to 4,
wherein the robot (100) stops in response to the soiling sensor signal changing from the first to the second state.

6. The method according to any one of claims 1 to 5,
wherein the robot (100) resets itself in response to the soiling sensor signal changing from the first to the second state.

7. The method according to claim 6,
wherein the resetting is achieved in that the robot (100) travels back a predetermined distance and/or time period in a straight line or travels back along the trajectory on which it arrived.

8. The method according to claims 6 and 7,
wherein obstacles are taken into account when reversing, such that no collision occurs.

9. The method according to any one of claims 6 to 8,
wherein the robot (100) stores information relating to the location of obstacles in a map, and when resetting uses the information stored in the map to avoid collisions and no current sensor information about obstacles is used.

10. The method according to any one of claims 5 to 9,
wherein after the stop or after the reset, the processing mode continues in the normal direction of travel at reduced speed.

11. The method according to any one of claims 1 to 10,
wherein - in the processing mode - the robot (100) moves across the floor surface at a speed less than or equal to a maximum speed associated with the processing mode, and wherein
changing the speed of the robot (100) is achieved by reducing the maximum speed.

12. The method according to any one of claims 1 to 11, wherein controlling the robot in a processing mode comprises:
performing path planning based on map information and on the robot position according to a movement pattern associated with the processing mode, an obstacle avoidance strategy associated with the processing mode, and a post-processing strategy of unprocessed surfaces associated with the processing mode;
converting the planned path in drive commands.

13. An autonomous mobile robot (100) having a control unit (150) which is designed to cause the robot to carry out a method according to any one of the preceding claims.

## Revendications

1. Procédé de commande d'un robot mobile autonome (100), qui comprend :
la commande du robot (100) dans un mode de traitement pour traiter une surface de sol avec un module de traitement de sol (160) du robot (100),
la détection d'un signal de capteur de saleté représentatif de l'encrassement de la surface du sol au moyen d'un capteur de saleté (126) disposé sur le robot,
la modification de la vitesse du robot (100) sur la base du signal du capteur de saleté pendant le traitement de la surface du sol,
dans lequel le signal du capteur de saleté peut prendre un premier état et un second état en fonction de l'encrassement de la surface du sol,
dans lequel le premier état du signal du capteur de saleté indique un encrassement normal et le second état du signal du capteur de saleté indique un encrassement important, dans lequel les deux états sont distingués sur la base d'un seuil de particules de saleté détectées,
dans lequel en réponse au second état du signal du capteur de saleté, la vitesse du robot est réduite d'une première valeur à une seconde valeur.

2. Procédé selon la revendication 1,
dans lequel une vitesse maximale du robot est affectée au mode de traitement, et
dans lequel la vitesse maximale dépend de l'état du signal du capteur de saleté.

3. Procédé selon la revendication 1 ou 2,
dans lequel, après la réduction de la vitesse, celle-ci est remise à la première valeur selon au moins un critère prédéfini.

4. Procédé selon la revendication 3,
dans lequel l'au moins un critère prédéfini comprend au moins l'un des éléments suivants : le signal de capteur de saleté reprend le premier état, le signal de capteur de saleté reprend le premier état et un temps prédéfini s'est écoulé depuis ; le signal du capteur de saleté revient au premier état et le robot a parcouru une distance définie depuis ; une période de temps prédéfinie s'est écoulée depuis que la vitesse a été réduite, le robot (100) a parcouru une distance prédéfinie depuis que la vitesse a été réduite.

5. Procédé selon l'une des revendications 1 à 4,
dans lequel le robot (100) s'arrête en réponse au signal du capteur de saleté passant du premier au second état.

6. Procédé selon l'une des revendications 1 à 5,
dans lequel le robot (100) recule en réponse au signal du capteur de saleté passant du premier au second état.

7. Procédé selon la revendication 6,
dans lequel la marche arrière est réalisée par le fait que le robot (100) recule d'une distance et/ou d'une durée pouvant être prédéfinies, soit en ligne droite, soit le long de la trajectoire par laquelle il est arrivé.

8. Procédé selon les revendications 6 et 7,
dans lequel les obstacles sont pris en compte lors de la marche arrière de manière à ce qu'aucune collision ne se produise.

9. Procédé selon l'une des revendications 6 à 8,
dans lequel le robot (100) stocke des informations relatives à l'emplacement d'obstacles sur une carte et, lors de la marche arrière, utilise les informations stockées sur la carte pour éviter les collisions et aucune information de capteur actuelle sur les obstacles n'est utilisée.

10. Procédé selon l'une des revendications 5 à 9,
dans lequel, après l'arrêt ou après la marche arrière, le mode de traitement se poursuit dans le sens normal de marche à vitesse réduite.

11. Procédé selon l'une des revendications 1 à 10,
dans lequel, dans le mode de traitement, le robot (100) se déplace sur la surface du sol à une vitesse qui est inférieure ou égale à une vitesse maximale associée au mode de traitement, et
dans lequel la modification de la vitesse du robot (100) est obtenue en réduisant la vitesse maximale.

12. Procédé selon l'une des revendications 1 à 11, dans lequel la commande du robot dans un mode de traitement comprend :
l'exécution d'une planification de trajectoire basée sur des informations cartographiques et la position du robot selon un modèle de mouvement associé au mode de traitement, une stratégie d'évitement d'obstacles associée au mode de traitement et une stratégie de finition de surfaces non traitées associée au mode de traitement ;
la conversion du chemin prévu en commandes de conduite.

13. Robot mobile autonome (100) avec une unité de commande (150) qui est agencée pour faire exécuter au robot un procédé selon l'une des revendications précédentes.
